# EUROPEAN PATENT APPLICATION

(11) **EP 0 877 275 A1**
(43) Date of publication of application: **11.11.1998**
(21) Application number: 98108239.9
(22) Date of filing: 06.05.1998
(51) Int. Cl.: G02C 1/00, G02C 5/12, G02C 1/02

(54) **Retaining element for spectacle nose pads**

(30) Priority: 09.05.1997 IT VR970035
(71) Applicant: Bline Optic Srl, 31040 Segusino, Treviso (IT)
(72) Inventor: Bof, Livio, 31040 Segusino, Treviso (IT)
(74) Representative: Petraz, Gilberto Luigi

(57) **Abstract**

A retaining element (20) for spectacle nose pad, and suitable for cooperating with a nose piece (10) is formed by a first wire which is suitably bent in order to form a bridge (11) which is placed on the nose, the opposed ends of said first wire being bent in order to form a clip, whereby the wire end portion (12) is inserted into a suitable hole made in the proximity of a lens edge, while two respective portions (13, 14) of the wire, which are substantially parallel to each other, resiliently rest on the lens edge. Said element (20) is constituted by a second wire which is suitably bent in order to form a substantially tubular portion (21) inside of which is inserted the end portion (12) of said first wire forming the spectacle nose piece, a first end of said element being bent in order to form a hook (22) which is resiliently hooked to one (13) of said respective portions of said first wire forming said nose piece, the other end (23) of said element (20) being bent in order to form a space (A) between two successive portions of the wire forming said element (20), a spectacle nose pad being inserted into said space.

## Description

### TECHNICAL FIELD

The present invention relates to a retaining element for spectacle nose pads.

More particularly, the present invention concerns to a stem shaped element provided with retaining means for a spectacle nose pad, said retaining element being resiliently coupled to a spectacle nose piece or bridge with no need of any welding operation.

The invention may be mainly applied in the field of spectacle manufacturing.

### BACKGROUND ART

In the spectacle manufacturing industry, there is always a trend to carry out new technical methods in order to reduce the spectacles weight and dimensions as much as possible, and, moreover, to succeed in realizing new aesthetical shapes and to give the opticians the greatest flexibility in fitting lenses to spectacles.

Document EP-A-724.178 discloses a device comprising a wire having a predetermined diameter and suitably bent in order to form a kind of clip.

One end of said wire is inserted into a hole, provided at the edge of a lens, in order to cooperate with clamping means suitable to avoid the wire escaping from said hole.

A suitably bent portion of said wire resiliently contacts the lens edge so as to maintain the wire in a predetermined position which defines a given pantoscopic angle in respect of the lens surface.

Then, such a frontal frame is easily assembled since it is sufficient to introduce and clamp one end of the wire inside of the hole provided on the lens, and then to bend the bent portion of the wire in order to carry out a resilient thrust on the lens edge, thereby obtaining the clamping of the different elements without requiring any welding or further drilling operations of the lens.

This technical solution allows an excellent adjustment of the clamping elements to be obtained, as well as a compensation of any possible small drilling mistakes of the lens made by the optician.

The technical solution cited above is similarly applied to a nose piece or bridge; however, the supporting stems of spectacle nose pads must be welded to the nose piece or bridge in one or two different points, what implies high costs and remarkable waste of time.

### DESCRIPTION OF THE INVENTION

The present invention aims to provide for an easy and economical solution to the above cited drawbacks of the state of the art, and to provide, thus, for a supporting stem element for spectacle nose pads which can be assembled to the nose piece or bridge without requiring any welding operations.

This is achieved by means of a retaining element having the features disclosed in the main claim.

The dependent claims outline particularly advantageous forms of embodiment of the element according to the invention.

The retaining element for nose pads according to the present invention is constituted by a wire which is suitably bent in order to form a substantially tubular portion inside of which is inserted one end of the wire forming the spectacle nose piece or bridge.

Furthermore, a first end of said stem is bent in order to form a hook which is resiliently hooked to a portion of the wire forming said nose piece or bridge.

The other end of said stem is bent too, in order to form a space between two successive portions of the wire which forms the stem; in said space is inserted a spectacle nose pad.

In work, the end of the wire forming the nose piece or bridge is inserted into the tubular portion and, once the stem has been pivoted, its hook-shaped end resiliently rests on a portion of the nose piece or bridge, thereby resiliently clamping the stem to the nose piece or bridge.

Thereafter, the nose pad is inserted into the space obtained by bending the other end of the stem.

The retaining element obtained in this way can steadily, though removably, be assembled to the nose piece stem without requiring any welding operations.

### ILLUSTRATION OF DRAWINGS

Other features and advantages of the invention will become apparent by reading the following description of a form of embodiment of the invention, given as a non-limiting example, with the help of the figures illustrated in the attached drawing, in which:
- figure 1 shows a side view of a nose piece or bridge for spectacles;
- figure 2 shows a frontal view of a portion of the nose piece according to figure 1;
- figure 3 is a view similar to that of figure 1, in which a retaining element according to the invention cooperates with the nose piece or bridge, and figure 4 is a view similar to that of figure 2, and shows a nose piece or bridge provided with the retaining element according to the invention.

### DESCRIPTION OF A FORM OF EMBODIMENT

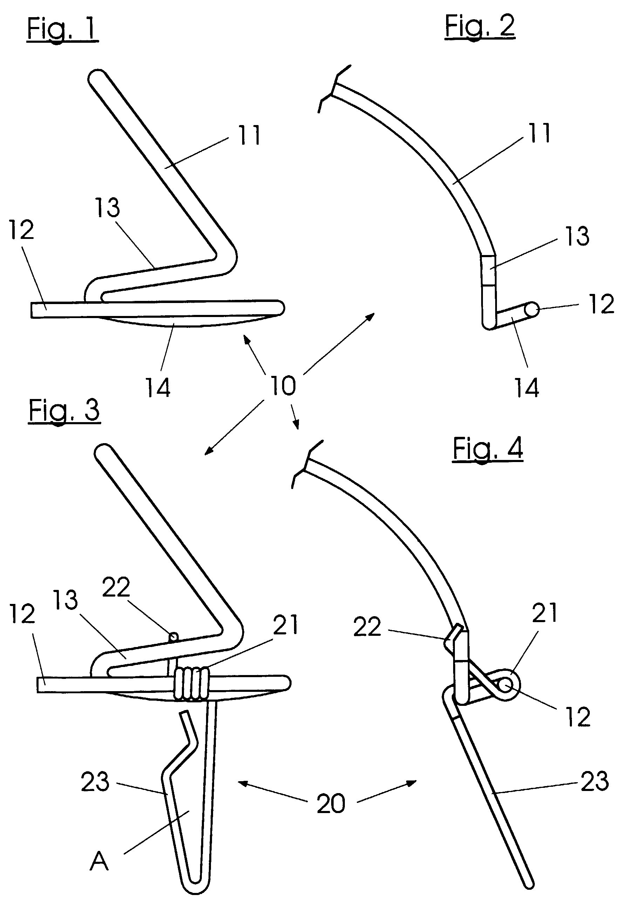

In figures 1 and 2, reference sign 10 generally indicates a spectacle nose piece or bridge, e.g. of the type disclosed in the European Patent Application n. 724.178, to which the reader can refer for more details.

Nose piece 10 is constituted by a wire which is suitably bent to form bridge 11 which is placed on the nose of the person wearing the spectacles.

The ends of the wire are bent to form a kind of clip, whereby the end portion 12 of the wire is inserted into a suitable hole made in the proximity of a lens edge (not shown in the figures), while two substantially parallel respective portions 13, 14 of the wire resiliently rest on the edge of said lens.

Thus, the lens is resiliently kept against the nose piece thanks to the combined resilient action of elements 12, 13, 14.

Thus, no welding operations are necessary to join nose piece 10 to the lens.

Figures 3 and 4 shows nose piece 10 as joined to a retaining element 20 according to the present invention.

Said element or stem 20 is constituted by a wire which is suitably bent in order to form a substantially tubular portion 21 inside of which is inserted one end 12 of wire 10 which forms the spectacle nose piece.

Besides, a first end of said stem is bent to form a hook 22 suitable for being resiliently joined to a portion 13 of the wire forming said nose piece.

The other end 23 of said stem 20 is bent too, in order to form a space A between two successive portions of the wire which forms the stem, a nose pad (not shown) being inserted into said space.

In work, the end of the wire forming the nose piece is inserted into the tubular portion and, once the stem has been pivoted, its hook-shaped end resiliently rests on a portion 13 of the nose piece, thereby resiliently clamping stem 20 to nose piece 10.

Thereafter, the nose pad is inserted inside of space A obtained by bending of the other stem end.

Thus, the retaining element obtained in this way can be steadily, though removably, be assembled to the nose piece without any welding operation.

## Claims

1. Retaining element (20) for spectacle nose pad, said element being suitable for cooperating with a nose piece (10) formed by a first wire which is suitably bent in order to form a bridge (11) which is placed on the nose, the opposed ends of said first wire being bent in order to form a clip, whereby the wire end portion (12) is inserted into a suitable hole made in the proximity of a lens edge, while two respective portions (13, 14) of the wire, which are substantially parallel to each other, resiliently rest on the lens edge, characterized in that said element is constituted by a second wire which is suitably bent in order to form a substantially tubular portion (21) inside of which is inserted the end portion (12) of said first wire forming the spectacle nose piece, a first end of said element being bent in order to form a hook (22) which is resiliently hooked to one (13) of said respective portions of said first wire forming said nose piece, the other end (23) of said element (20) being bent in order to form a space (A) between two successive portions of the wire forming said element (20), a spectacle nose pad being inserted into said space.

2. Retaining element (20) according to claim 1, characterized in that it is fixed to the nose piece (10) in a removable way without requiring any welding operation.
